# EUROPÄISCHE PATENTANMELDUNG

(11) **EP 3 056 789 A1**
(43) Veröffentlichungstag der Anmeldung: **17.08.2016**
(21) Anmeldenummer: 16155411.8
(22) Anmeldetag: 12.02.2016
(51) Int. Cl.: F16L 59/16, F24D 19/00

(54) **ISOLIERGEHÄUSE FÜR MEDIUMFÜHRENDE ROHRLEITUNGEN MIT ARMATUREN**

(30) Priorität: 12.02.2015 DE 202015001129 U
(71) Anmelder: PAW GmbH & Co. KG, 31789 Hameln (DE)
(72) Erfinder: O'Sullivan, Toni, 31675 Bückeburg (DE); Pommerening, Marc, 31789 Hameln (DE)
(74) Vertreter: Jabbusch, Matthias

(57) **Zusammenfassung**

Bei einem Isoliergehäuse (1) für mediumführende Rohrleitungen mit Armaturen, umfassend an die Rohrleitungen anlegbare Gehäuseabschnitte (4), ist vorgesehen, dass die Gehäuseabschnitte insbesondere in Anlagebereichen mit elastischen Dichtungen (6) ausgerüstet sind und dass diese Dichtungen in die Gehäuseabschnitte einstückig eingeformt sind.

## Beschreibung

Die Erfindung betrifft ein Isoliergehäuse für mediumführende Rohrleitungen mit Armaturen, umfassend an die Rohrleitungen anlegbare Gehäuseabschnitte.

Mediumführende Rohrleitungen mit Armaturen finden regelmäßig im Heizungsbau und auch bei der Installation von Solarthermieanlagen Anwendung. Diese Rohrleitungen sind mit Bauelementen zu verbinden, diese Bauelemente können Ventile, Zähler oder ähnliche Bauelemente sein. Dabei führen die Rohrleitungen oft erwärmte Medien, bei Solarthermieanlagen bis zu 90° C heißes Solarthermieanlagenmedium.

Bekannte Isoliergehäuse sind aus Gehäuseabschnitten gefertigt, die an die Rohrleitungen angelegt werden. Regelmäßig wird das Isoliergehäuse durch das Anlegen der Gehäuseabschnitte von verschiedenen Seiten an ein und dieselben Rohrleitungen heran ausgebildet. Beispielsweise kann das Isoliergehäuse aus einer Hinterschale und aus einer Vorderschale bestehen.

Diese Isoliergehäuse sind regelmäßig aus geschäumtem Kunststoffmaterial gefertigt, die eine hohe Wärmeisolationswirkung haben. Problematisch ist aber ihr nahes Anschließen an die Rohrleitungen bzw. an Verschraubungen der Rohrleitungen. Problematisch ist weiterhin ein lückenbehaftetes Umhüllen der Rohrleitung und Komponenten, was eine thermisch erzeugte Luftkonvektion durch die Isolierung aufgrund eines Kamineffektes erzeugen kann.

Der Erfindung liegt daher die Aufgabe zugrunde, ein Isoliergehäuse der eingangs genannten Gattung aufzuzeigen, dessen wärmeisolierende Wirkung insbesondere im Bereich von Armaturen erhöht ist.

Diese Aufgabe ist erfindungsgemäß dadurch gelöst, dass die Gehäuseabschnitte insbesondere in Anlagebereichen mit elastischen Dichtungen ausgerüstet sind und dass diese Dichtungen in die Gehäuseabschnitte einstückig eingeformt sind.

Das erfindungsgemäße Isoliergehäuse hat wie im Stand der Technik Gehäuseabschnitte, die von verschiedenen Seiten an die Rohrleitungen angenähert werden. Erfindungsgemäß ist vorgesehen, dass die Gehäuseabschnitte in Anlagebereichen mit elastischen Dichtungen ausgerüstet sind. Diese elastischen Dichtungen sind zur engen Anlage an den Rohrleitungen geeignet, so dass sich eine gute Isolierung mit den damit einhergehenden Energiespareffekten einstellt.

Erfindungsgemäß ist dabei vorgesehen, dass diese Dichtungen in die Gehäuseabschnitte einstückig eingeformt sind. Es findet also keine separate Fertigung von Dichtungen und ihre nachträgliche Einbringung in die Gehäuseabschnitte statt, vielmehr werden die Dichtungen mit den Gehäuseabschnitten gemeinsam hergestellt und sind somit einstückig in die Gehäuseabschnitte eingeformt. Damit sind die Dichtungen unverrückbar in den Gehäuseabschnitten angeordnet, auch bei unregelmäßig ausgebildeten Armaturen, ihren Verschraubungen oder Abzweigungen ist eine sichere Anlage der Dichtungen an diesen Rohrleitungen gewährleistet. So kann sich eine Dichtung beispielsweise an die Flanken einer Mutter anformen und damit Luftzirkulationen im Bereich der Rohrleitungen verhindern.

Nach einer ersten Weiterbildung der Erfindung ist vorgesehen, dass das Material der Dichtungen gleich dem Material der Gehäuseabschnitte ist, wobei die Dichte des Materials der Dichtungen größer als die Dichte des Materials der Gehäuseabschnitte ist. Durch die gemeinsame Fertigung von Gehäuseabschnitten und Dichtungen stellt sich eine Materialgleichheit ein. Während die Gehäuseabschnitte aus geschäumten Materialien mit guter Isolierwirkung aufgrund zum Beispiel von Lufteinschlüssen bestehen, sind in den Dichtungen keine Lufteinschlüsse vorhanden und ist aufgrund der Ausbildung des vollen Materials eine höhere Dichte erreicht. Dadurch ergibt sich aber auch eine größere Elastizität und Anschmiegsamkeit an die voneinander verschiedenen Armaturen. Aufgrund der Materialgleichheit von Dichtungen und Gehäuseabschnitten ist die Herstellung des erfindungsgemäßen Isoliergehäuses vereinfacht.

Schließlich kann noch vorgesehen sein, dass die Dichtungen eine Zuordnung zu in einem Gehäuseabschnitt angeordneten Vertiefungen zur Aufnahme der Armaturen und deren Verschraubung aufweisen. Im Bereich von Armaturen sind häufig Verschraubungen vorgesehen, in denen Leitungsabschnitte mit den Armaturen verbunden werden. Wenn das Isoliergehäuse gerade diesen Armaturen zugeordnet ist, soll auch den Verschraubungen eine Dichtung zugeordnet werden. Dazu werden die Dichtungen den Vertiefungen in den Gehäuseabschnitten zugeordnet, die später auf Höhe der Armaturen bzw. der Verschraubung anzuordnen sind. So werden die Dichtungen den Verschraubungen zugeordnet. Damit wird beispielsweise ein Luftstrom im Inneren des Isoliergehäuses verhindert.

Ein Ausführungsbeispiel der Erfindung, aus dem sich weitere erfinderische Merkmale ergeben, ist in der Zeichnung dargestellt. Es zeigen
- Fig. 1: eine perspektivische Ansicht eines erfindungsgemäßen Isoliergehäuses für mediumführende Rohrleitungen mit Armaturen,
- Fig. 2: eine perspektivische Ansicht der beiden das Isoliergehäuse gemäß Fig. 1 ausbildenden Gehäuseabschnitte, und
- Fig. 3 und Fig. 3a: eine Seitenansicht der Gehäuseabschnitte gemäß Fig. 2 unter Anlage an Rohrleitungen mit Armaturen und, Fig. 3a in maßstäblicher Vergrößerung der Einzelheit A in Fig. 3.

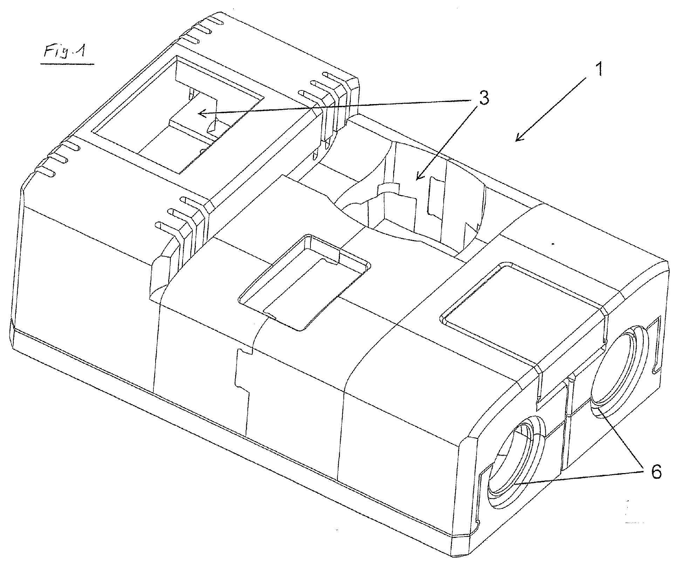

Fig. 1 zeigt das Isoliergehäuse 1 in seinem geschlossenen Bauzustand. Es ist zwei Rohrleitungen wärmeisolierend zuordbar. Dabei hat das Isoliergehäuse 1 Aussparungen 3 beispielsweise für eine Pumpe oder dergleichen.

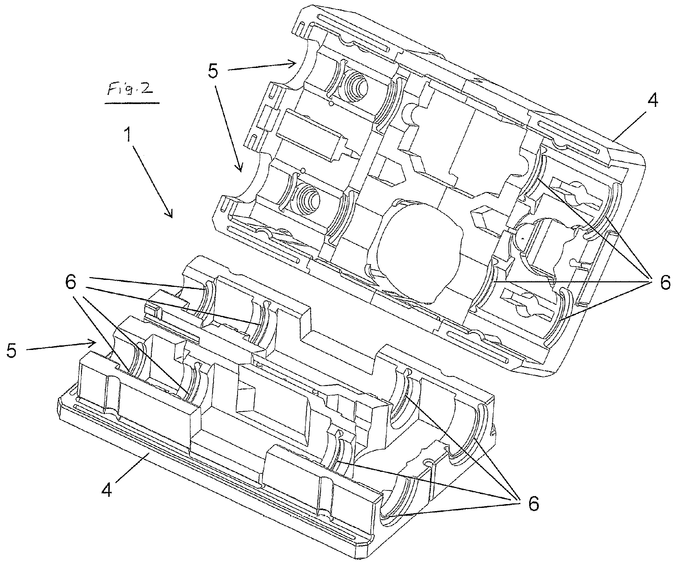

Fig. 2 zeigt, dass das Isoliergehäuse 1 aus Gehäuseabschnitten 4 ausgebildet ist. Die Gehäuseabschnitte 4 bilden jeweils eine Vorderschale und Hinterschale aus.

In die Gehäuseabschnitte 4 sind Vertiefungen 5 für Rohrleitungen sowie den Rohrleitungen zugeordnete Verschraubungen eingebracht. Erfindungsgemäß sind diesen Vertiefungen Dichtungen 6 zugeordnet, die als Dichtlippen ausgebildet sind. Die Dichtungen 6 sind aus dem gleichen Material wie die Gehäuseabschnitte 4 hergestellt, dabei sind die Dichtungen 6 und Gehäuseabschnitte 4 miteinander einstückig verbunden.

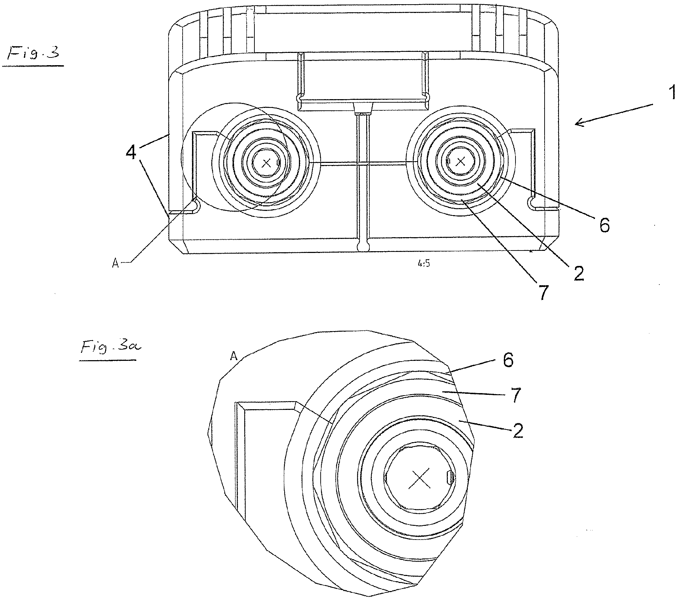

Bei einer Aufeinanderlage der beiden Gehäuseabschnitte 4 aufeinander, wie in Fig. 1 gezeigt, kommen auch die auf gleichen Höhen der Gehäuseabschnitte 4 angeordneten Dichtungen 6 einander nah. Sie können dann eine Rohrleitung vollständig umlaufende Dichtringe ausbilden, jeder Gehäuseabschnitt 4 trägt dazu eine halbkreisförmig ausgebildete Dichtung 6. Die Darstellungen in Fig. 3 und Fig. 3a zeigen die Zuordnung der Dichtungen 6 zu den Rohrleitungen 2. Die Dichtungen 6 sind regelmäßig im Bereich von Verschraubungen angeordnet, eine Anordnung erfolgt aber auch an den Austritten der Rohrleitungen 2 aus dem Isoliergehäuse 1.

Fig. 3a zeigt diese Situation, hier ist am Austritt der Rohrleitung 2 aus dem Isoliergehäuse 1 eine Mutter 7 und somit eine Verschraubung angeordnet. Die in diesem Bereich vorgesehenen Dichtungen 6 aus den beiden Gehäuseabschnitten 4 legen sich eng an die Mutter 7 an und schmiegen sich auch an den planen Verlauf der jeweiligen Mutterflanken an. Auf diese Weise wird eine Luftzirkulation in der Rohrbaugruppe verhindert.

Alle in der vorstehenden Beschreibung und in den Ansprüchen genannten Merkmale sind in einer beliebigen Auswahl mit den Merkmalen des unabhängigen Anspruchs kombinierbar. Die Offenbarung der Erfindung ist somit nicht auf die beschriebenen bzw. beanspruchten Merkmalskombinationen beschränkt, vielmehr sind alle im Rahmen der Erfindung sinnvollen Merkmalskombinationen als offenbart zu betrachten.

## Patentansprüche

1. Isoliergehäuse für mediumführende Rohrleitungen mit Armaturen, umfassend an die Rohrleitungen anlegbare Gehäuseabschnitte,
**dadurch gekennzeichnet,**
**dass** die Gehäuseabschnitte (4) insbesondere in Anlagebereichen mit elastischen Dichtungen (6) ausgerüstet sind und dass diese Dichtungen (6) in die Gehäuseabschnitte (4) einstückig eingeformt sind.

2. Isoliergehäuse nach Anspruch 1, **dadurch gekennzeichnet, dass** das Material der Dichtungen (6) gleich dem Material der Gehäuseabschnitte (4) ist, wobei die Dichte des Materials der Dichtungen (6) größer als die Dichte des Materials der Gehäuseabschnitte (4) ist.

3. Isoliergehäuse nach Anspruch 1 oder 2, **dadurch gekennzeichnet, dass** die Dichtungen (6) eine Zuordnung zu in Gehäuseabschnitt (4) angeordneten Vertiefungen (5) zur Aufnahme der Armaturen und deren Verschraubung zugeordnet sind.
